# EUROPEAN PATENT APPLICATION

(11) **EP 2 312 359 A1**
(43) Date of publication of application: **20.04.2011**
(21) Application number: 09290799.7
(22) Date of filing: 19.10.2009
(51) Int. Cl.: G02B 6/44

(54) **Optical-fiber cable having high fiber count and high fiber density**

(71) Applicant: Draka Comteq B.V., 1083 HJ Amsterdam (NL)
(72) Inventor: Tatat, Olivier M., 62231 Sangatte (FR)
(74) Representative: op den Brouw-Sprakel, Vera Stefanie Irene

(57) **Abstract**

Disclosed is a reduced-diameter optical-fiber cable that possesses a high fiber count and a high cable fiber density. The high-fiber-density optical-fiber cable, which is suitable for deployments in ducts, is capable of achieving outstanding attenuation performance when subjected to temperature variations between about -40°C and 70°C.

## Description

### FIELD OF INVENTION

The present invention embraces reduced-diameter optical-fiber cables, such as optical-fiber cables having a high fiber count and a high fiber density.

### BACKGROUND OF THE INVENTION

As compared with traditional wire-based networks, optical fiber communication networks are capable of transmitting significantly more information at significantly higher speeds. Optical fibers, therefore, are being increasingly employed in communication networks.

To expand total transmission throughput, optical-fiber network providers are attempting to place ever more optical fibers in ever-smaller spaces. Packing fibers into tight spaces, however, can cause undesirable attenuation. Indeed, there is an inherent trade-off between increased fiber density and signal attenuation.

Fiber optic cables are commonly deployed in ducts (*e.g*., ducts having an outer diameter of about 42 millimeters). Traditional duct installation, however, uses space inefficiently. The typical capacity of such ducts has been one cable per duct, although in some cases two cables have been installed.

In this regard, it is desirable to achieve optical-fiber cables having a reduced diameter such that multiple (*e.g*., three) optical-fiber cables can be installed in a duct. It is also desirable to achieve optical-fiber cables having a high fiber density. Moreover, it is desirable to achieve high-fiber-density optical-fiber cables having satisfactory attenuation performance.

Additionally, it is desirable for optical-fiber cables deployed in ducts to be robust enough to withstand mechanical stresses that may occur during installation. Such optical-fiber cables should also be able to withstand conditions of use over a wide temperature range, such as between about -20°C and 50°C. Indeed, it is desirable for optical-fiber cables to be able to withstand an even wider temperature range, such as between about -40°C and 70°C.

### SUMMARY OF THE INVENTION

It is an object of the present invention to provide a reduced-diameter optical-fiber cable having a high fiber count (i.e. a high number of fibers in the cable) and a high fiber density.

It is another object of the present invention to provide a reduced-diameter optical-fiber cable having a cable jacket formed of a material with low coefficient of friction, thereby allowing three reduced-diameter optical-fiber cables to be concurrently pulled over 300 meters through a cable duct having an inner diameter of about 42 millimeters.

It is another object of the present invention to provide a high-fiber-density optical-fiber cable having satisfactory crush resistance.

It is another object of the present invention to provide a high-fiber-density optical-fiber cable having an operating temperature between about -30°C and 60°C.

It is another object of the present invention to provide a high-fiber-density optical-fiber cable having a storage temperature between about -40°C and 70°C.

It is another object of the present invention to provide a reduced-diameter optical-fiber cable (*e.g*., a cable having an outer diameter of about 17.5 millimeters, preferably of about 16 millimeters or less) that includes at least about 720 optical fibers.

It is another object of the present invention to provide a reduced-diameter optical-fiber cable (*e.g*., a cable having an outer diameter of about 17 millimeters or less) that includes at least about 864 optical fibers.

It is another object of the present invention to provide high-fiber-density optical-fiber cables that are capable of efficient installation into ducts.

### BRIEF DESCRIPTION OF THE DRAWING

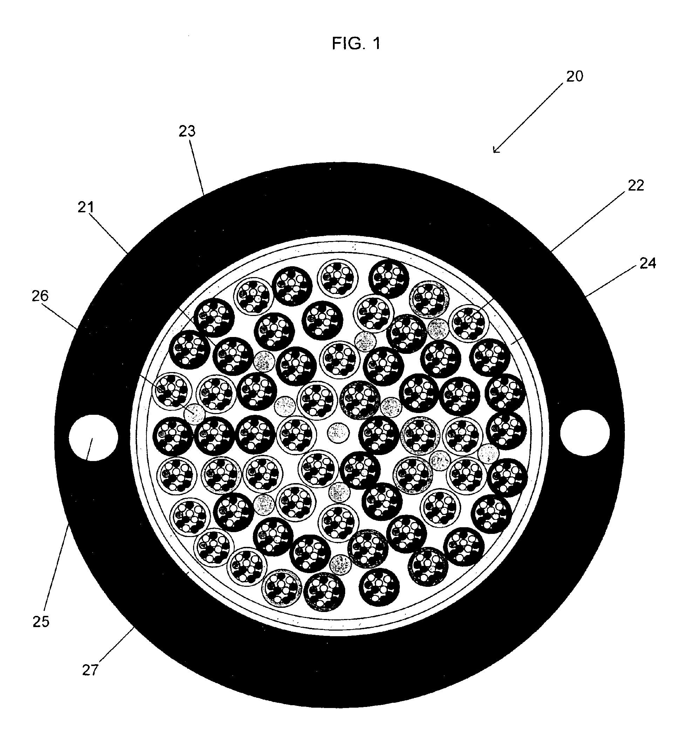

Figure 1 schematically depicts an exemplary high-count, high-fiber-density cable in accordance with the present invention.

### DETAILED DESCRIPTION

The present invention embraces a high-fiber-density optical-fiber cable.

The high-fiber-density cable includes a plurality of low-modulus buffer tubes (*i.e*., low-modulus micromodules, microsheaths, or "flextubes"), each of which may contain a plurality of optical fibers. Typically, the high-fiber-density cable includes between about 30 and 60 flextubes (*e.g*., 36 or 48 flextubes). Exemplary flextubes contain 12, 18, or 24 optical fibers.

Typically, the flextubes are formed from a polymeric material having a Young's modulus of less than about 500 megapascals (MPa) (*e.g*., 300 MPa or less), typically less than about 250 MPa (*e.g*., 200 MPa or less, such as 50 MPa to 150 MPa), and more typically less than about 100 MPa. To achieve a Young's modulus less than about 100 MPa, exemplary flextubes may be formed from a thermoplastic copolyester elastomer.

For example, the flextubes may be formed from a material having a Young's modulus of between about 10 MPa and 90 MPa (*e.g*., 25 MPa to 75 MPa). For example, in some embodiments, the flextubes may be formed from a material having a Young's modulus greater than about 50 MPa. In other embodiments, the flextubes may be formed from a material having a Young's modulus less than 50 MPa, such as between about 20 MPa and 40 MPa (*e.g*., between about 25 MPa and 30 MPa).

Moreover, the flextubes typically have a relatively thin wall of between about 0.1 millimeter (mm) and 0.2 millimeter. In one embodiment, the flextubes have a wall thickness of about 0.15 millimeter or less. These flextubes can be readily accessed without special tools.

The flextubes may have an outer diameter of between about one millimeter and two millimeters. Typically, the flextubes have an outer diameter less than about 1.5 millimeters, such as between about 1.0 millimeter and 1.3 millimeters.

The present flextubes have a relatively high micromodule filling coefficient. As used herein, the term "micromodule filling coefficient" refers to the ratio of the total cross-sectional area of the fibers within a micromodule versus the inner cross-sectional area of that micromodule (*i.e*., defined by the inner boundary (i.e. inner diameter) of the micromodule); i.e. the sum of the cross-sectional areas of all of the fibers within a specific microdule divided by the inner cross-sectional area of that specific micromodule (the coefficient not having a unit).

Optical-fiber cables of the present invention include flextubes typically having a micromodule filling coefficient greater than 0.5, such as greater than 0.65 (*e.g*., about 0.7). For example, a flextube (*i*) having an outer diameter of about 1.13 millimeters and an inner diameter of about 0.83 millimeter and (*ii*) containing twelve (12) 200-micron optical fibers would have a micromodule filling coefficient of about 0.7. A flextube containing (*i*) having an outer diameter of about 1.3 millimeters and an inner diameter of about 1.0 millimeter and (*ii*) containing twelve (12) 242-micron optical fibers would also have a micromodule filling coefficient of about 0.7

Additionally, as used herein, the term "cumulative micromodule filling coefficient" refers to the ratio of the total cross-sectional area of the optical fibers enclosed within micromodules versus the sum of the inner cross-sectional areas of the micromodules containing those optical fibers ; i.e. the sum of the cross-sectional areas of all of the fibers within all of the microdules divided by the sum of the inner cross-sectional areas of all of the micromodules (the coefficient not having a unit).

A cable jacket surrounds the flextubes. In an exemplary embodiment, the cable jacket is formed of a polyolefin, such as polyethylene or polypropylene. Polyethylene, for instance, has a relatively low coefficient of friction, which allows it to be easily pulled through a cable duct. Other exemplary polymers that may be used to form the cable jacket include fluoropolymers, such as polyvinyl fluoride (PVF) or polyvinylidene difluoride (PVDF).

The material used to form the cable jacket may include additives such as nucleating agents, antioxidants, UV absorbers, and carbon black.

The cable jacket typically has an outer diameter of less than about 18 millimeters, such as less than about 16 millimeters (*e.g*., about 14 millimeters). Those having ordinary skill in the art will appreciate that the outer diameter of the cable jacket depends upon the respective characteristics of the optical fibers and/or micromodules (*e.g*., numbers and dimensions) enclosed within the interior space defined by the cable jacket.

To ensure that the high-fiber-density cable has adequate crush resistance, in one embodiment the cable jacket has an average thickness of at least about two millimeters (*e.g*., about 2.2 millimeters). For example, a high-fiber-density cable having an outer diameter of about 16 millimeters would have an inner diameter of no more than about 12 millimeters. Alternatively, to the extent that crush resistance and/or tensile strength is less of a concern, the thickness of the cable jacket can be further reduced.

Accordingly, the present high-fiber-density cable complies with the IEC 60799-1-2 (method E3) and the IEC 60794-3-10 standards with regard to crush resistance. The IEC 60794-1-2 (method E3) and the IEC 60794-3-10 standards are hereby incorporated by reference in their entirety.

In addition, the optical-fiber cables in accordance with the present invention typically meet or exceed other International Electrotechnical Commission standards as set forth in the IEC 60794 standard, such as tensile strength (IEC 60794-1-2-E1), impact (IEC 60794-1-2-E4), torsion (IEC 60794-1-2-E7), bending (IEC 60794-1-2-E11), temperature cycling (IEC 60794-1-2-F1), and water tightness (IEC 60794-1-2-F5). These IEC 60794 standards are hereby incorporated by reference in their entirety.

The cable jacket typically includes one or more radial strength members (RSMs). For example, fiberglass reinforcing rods (*e.g*., glass-reinforced plastic (GRP)) may be incorporated into the cable jacket. The radial strength members typically have a total cross-sectional area so as to ensure that the cable jacket contracts (*i.e*., shrinks) less than about 0.5 percent at minimum operating temperatures (*e.g*., at about -30°C).

In this regard, exemplary radial strength members may have a diameter of between about 1.0 millimeter and 1.8 millimeters, such as about 1.4 millimeters. The strength members are typically positioned (*e.g*., embedded) within the cable jacket so that at least 0.4 millimeter of the jacket concentrically surrounds the strength member. In other words, the strength members are typically positioned at least 0.4 millimeter from both the inner and outer surfaces of the cable jacket. This positioning of the strength members ensures that the cable jacket does not "zipper" (*i.e.*, open) along the strength members when the high-fiber-density cable is twisted or bent. As will be appreciated by those having ordinary skill in the art, zippering may occur when the mechanical integrity of the cable jacket is compromised after sufficient deterioration of the cable jacket. Accordingly, zippering may result in additional optical-fiber attenuation and possibly even mechanical damage to the enclosed optical fibers.

Within the cable jacket, the plurality of flextubes are typically stranded about each other to form a flexible stranded core. Such stranding can be accomplished in one direction (*e.g*., "S" helical stranding or "Z" helical stranding). In this regard, it has been observed that helical stranding helps to equalize the response of each flextube when the cable is subjected to bending. Alternatively, Reverse Oscillated Lay stranding, known as "S-Z" stranding, may be employed instead.

In another cable embodiment, the stranded core may be formed from multiple stranded elements that are stranded about each other. For example, each stranded element may include a plurality of flextubes (*e.g*., three, four, six, or twelve flextubes) stranded about each other).

One or more layers of high-strength yarns (*e.g*., aramid or non-aramid yarns) may be positioned parallel to or wrapped (*e.g*., contrahelically) around the stranded flextubes.
Water-swellable tape may also be wrapped around the stranded flextubes. In some embodiments, the high-strength yarns and/or water-swellable tape may be secured with one or more binder threads. Ripcords may be placed inside (*e.g*., immediately beneath) the cable jacket.

The stranding lay length of the stranded flextubes is typically equal to at least about 30 times the theoretical stranded-core diameter, but no more than about 40 times the outer diameter of the reduced-diameter cable.

As used herein, the term "stranding lay length" refers to the longitudinal distance along the reduced-diameter cable in which the stranded flextubes complete one helical wrap.

Moreover, as used herein, the term "theoretical stranded-core diameter" refers to the diameter of the most compact configuration possible for arranging circular flextubes in layers.

By way of example, for a high-fiber-density cable having an outer diameter of about 16 millimeters, an inner diameter of about 12 millimeters, and a theoretical stranded-core diameter of about 11 millimeters, the flextubes' stranded lay length should be between about 330 millimeters and 640 millimeters.

By way of further example and as depicted in Figure 1, 60 flextubes may be arranged in a 0-6-12-18-24 configuration (*i.e*., a configuration having concentric circles of 0, 6, 12, 18, and 24 flextubes). Such a configuration has a theoretical stranded-core diameter equal to nine times (9x) the diameter of the flextubes.

In an alternative embodiment, 48 flextubes may be arranged in a 3-9-15-21 configuration, which has a theoretical stranded-core diameter equal to about eight times (8x) the diameter of the flextubes.

With respect to the present high-fiber-density cable, yarns, nonwovens, fabrics (*e.g*., tapes), foams, or other materials containing water-swellable material and/or coated with water-swellable materials (*e.g*., including super absorbent polymers (SAPs), such as SAP powder) may be employed within the cable to provide water blocking.

In one embodiment, the flextubes themselves may include filling greases or lubricants (*e.g*., thixotropic filling greases) to promote water tightness. Alternatively, the high-fiber-density cable may include dry structures (*i.e*., grease-free flextubes).

The present high-fiber-density cable has a relatively high fiber density. As used herein, the term "cable fiber density" of an optical-fiber cable refers to the ratio of the total number of optical fibers within the optical-fiber cable versus the cross-sectional area of the optical-fiber cable as defined by the outer boundary (i.e. outer diameter) of the outer jacket; i.e. the number of optical fibers in the cable diveded by the cross-sectional area of the outer diameter of the cable (the ratio having a unit of fibers/mm²).

Optical-fiber cables having higher cable fiber densities are desired, because such high-fiber-density cables have an increased number of optical fibers and/or require less space for installation.

The high-fiber-density cable in accordance with the present invention has a cable fiber density of at least about 2.0 fibers/mm² (*e.g*., 2.1-2.3 fibers/mm²), typically at least about 2.4 fibers/mm² (*e.g*., 2.45-2.75 fibers/mm²) and more typically at least about 2.85 fibers/mm² (*e.g*., 3.0-3.6 fibers/mm²). In a more preferred embodiment the high-fiber-density cable in accordance with the present invention has a cable fiber density of at least about 3.25 fibers/mm² or even of at least about 4.0 fibers/mm² (*e.g*., 4.1-4.3 fibers/mm²).

In this regard, reducing the thickness of the cable jacket will reduce cable diameter, thereby increasing cable fiber density. Higher cable fiber densities may be achieved, for example, by modifying (*e.g*., reducing) the cross-sections of the radial strength members. In some cable embodiments, it might be possible to exclude radial strength members altogether.

Moreover, as used herein, the term "inner cable fiber density" of an optical-fiber cable refers to the ratio of the total number of optical fibers within the optical-fiber cable versus the inner cross-sectional area of the optical-fiber cable as defined by the inner boundary (*i.e*., the inner diameter) of the outer jacket; i.e. the number of optical fibers in the cable divided by the cross-sectional area of the inner diameter of the cable (the ratio having a unit of fibers/mm²).

Typically, the high-fiber-density cable in accordance with the present invention has an inner cable fiber density of at least about 3.5 fibers/mm², preferably 3.75 fibers/mm², more typically at least about 5.0 fibers/mm², such as about 6.0 fibers/mm² or more. However, higher inner cable fiber densities such as for example 7.0 fibers/mm² or more are also possible and highly desirable.

In one exemplary embodiment, the high-fiber-density cable in accordance with the present invention has a cable fiber density of at least about 2.4 fibers/mm² (*e.g*., 2.5-2.7 fibers/mm²). Typically, the high-fiber-density cable has a cable fiber density of at least about 2.8 fibers/mm², such as about 3.5 fibers/mm² or more. For example, a high-fiber-density cable, having an outer diameter of about 16 millimeters and containing 720 optical fibers having an outer diameter of about 200 microns, would have a cable fiber density of about 3.58 fibers/mm².

The 720 optical fibers may, for example, be contained in 60 flextubes containing 12 optical fibers or in 30 flextubes containing 24 optical fibers. By way of further example, a high-fiber-density cable (*i*) having an outer diameter of about 14 millimeters and (*ii*) containing 432 optical fibers, each having an outer diameter of about 200 microns, would have a cable fiber density of about 2.81 fibers/mm².

In accordance with the present invention, Table 1 (below) depicts various cable embodiments deploying 200-micron optical fibers:

**Table 1**

| | Ex. 1 | Ex. 2 | Ex. 3 | Ex. 4 | Ex. 5 | Ex. 6 |
|---|---|---|---|---|---|---|
| flextubes per cable | 72 | 60 | 48 | 36 | 36 | 30 |
| flextube outer diameter (mm) | 1.13 | 1.13 | 1.13 | 1.13 | 1.3 | 1.53 |
| flextube inner diameter (mm) | 0.85 | 0.85 | 0.85 | 0.85 | 1.03 | 1.26 |
| fibers per flextube | 12 | 12 | 12 | 12 | 18 | 24 |
| optical fibers per cable | 864 | 720 | 576 | 432 | 648 | 720 |
| optical fiber diameter (µm) | 200 | 200 | 200 | 200 | 200 | 200 |
| cable outer diameter (mm) | 17,1 | 15.9 | 14.9 | 13.6 | 19.8 | 15.5 |
| cable inner diameter (mm) | 12.7 | 11.4 | 10.4 | 9.1 | 10.3 | 11 |
| cable fiber density (fibers/mm² ) | 3.76 | 3.63 | 3.30 | 2.97 | 3.77 | 3.82 |
| inner cable fiber density (fibers/mm²) | 6.82 | 7.05 | 6.78 | 6.64 | 7.78 | 7.58 |
| cumulative micromodule filling coefficient | 0.66 | 0.66 | 0.66 | 0.66 | 0.68 | 0.61 |

In accordance with the present invention, Table 2 (below) depicts various cable embodiments deploying 242-micron optical fibers:

**Table 2**

| | Ex. 1 | Ex. 2 | Ex. 3 | Ex. 4 | Ex. 5 |
|---|---|---|---|---|---|
| flextubes per cable | 72 | 60 | 48 | 36 | 30 |
| flextube outer diameter (mm) | 1.3 | 1.3 | 1.4 | 1.3 | 1.8 |
| flextube inner diameter (mm) | 1.03 | 1.03 | 1.1 | 1.03 | 1.49 |
| fibers per flextube | 12 | 12 | 12 | 12 | 24 |
| optical fibers per cable | 864 | 720 | 576 | 432 | 720 |
| optical fiber diameter (µm) | 242 | 242 | 242 | 242 | 292 |
| cable outer diameter (mm) | 18.9 | 17.9 | 17.1 | 14.8 | 17.2 |
| cable inner diameter (mm) | 14.4 | 12.9 | 12.6 | 10.3 | 12.8 |
| cable fiber density (fibers/mm²) | 3.08 | 3.03 | 2.51 | 2.51 | 3.10 |
| inner cable fiber density (fibers/mm2) | 5.31 | 5.51 | 4.62 | 5.19 | 5.60 |
| cumulative micromodule filling coefficient | 0.66 | 0.66 | 0.58 | 0.66 | 0.63 |

Figure 1 depicts an exemplary high-fiber-density cable 20 in accordance with the present invention. The high-fiber-density cable 20 includes sixty (60) stranded flextubes 21, each having twelve (12) optical fibers 22. Accordingly, as depicted in Figure 1, the high-fiber-density cable 20 includes 720 optical fibers 22. The high-fiber-density cable 20 also contains water-swellable yarns 26, which may be positioned between and helically stranded with the flextubes 21. Water-swellable tape 24 and aramid yarns 27 surrounds the flextubes 21. A cable jacket 23 encloses the flextubes 21, the water-swellable tape 24, and the aramid yarns 27. As depicted in Figure 1, the aramid yarns 27 are typically positioned between the water-swellable tape 24 and the cable jacket 23. Two radial strength members 25 are incorporated into the cable jacket 23.

The high-fiber-density cables according to the present invention are capable of achieving outstanding attenuation performance. In this regard, the attenuation of reduced-diameter cables may be evaluated via temperature-cycle testing. For example, a section of cable (*e.g*., a cable section of between about 1000 meters and 2000 meters) may be temperature cycled from -40°C to 70°C. This temperature cycling is typically performed twice on the cable section.

Alternatively, more rigorous temperature cycling may be performed. For example, a section of the high-fiber-density cable may temperature cycled twice from -40°C to 70°C, then aged for about five days at 85°C, then temperature cycled once from -40°C to 70°C.

As used herein and unless otherwise specified, reference to "temperature cycling," "cable temperature cycling," "temperature cycle testing," or the "temperature cycle test" refers to the testing procedures set forth in Table 3 (below). In particular, Table 8 depicts the approximate temperature and soak time of the various steps of the foregoing temperature cycle testing.

**Table 3**

| Temperature (°C) | Approximate Soak Time (hours) |
|---|---|
| 20 | initial |
| -20 | 15-25 |
| -30 | 15-25 |
| -40 | 15-25 |
| 60 | 15-25 |
| 70 | 65-75 |
| -20 | 15-25 |
| -30 | 20-30 |
| -40 | 20-30 |
| 70 | 15-20 |
| 20 | 110-120 |
| 85 | 120-130 |
| -20 | 15-25 |
| -40 | 15-25 |
| 70 | 15-20 |
| 20 | final |

During and after temperature cycling, the attenuation of the optical fibers contained within the high-fiber-density cable is measured. For single-mode optical fibers, attenuation is often measured at wavelengths of 1550 nanometers (nm) and 1625 nanometers. It is desirable that the optical fibers contained within the present high-fiber-density cable experience an increase in attenuation of no more than about 0.1 dB/km (*e.g*., less than about 0.05 dB/km, such as less than about 0.03 dB/km) during temperature cycling.

Temperature cycle testing may also be performed in accordance with IEC 60794-1-2 Method F1, which, as noted, is incorporated by reference. In accordance with IEC 60794-1 Method F1, the optical fibers within the present high-fiber-density cable experience an increase in attenuation of no more than about 0.1 dB/km.

The high-fiber-density, optical-fiber cables according to the present invention typically employ a plurality of single-mode optical fibers.

In one embodiment, conventional standard single mode fibers are employed in the high-fiber-density optical-fiber cables according to the present invention. Suitable single-mode optical fibers (SSMF) that are compliant with the ITU-T G.652.D standard are commercially available, for instance, from Draka (Claremont, North Carolina).

In another embodiment, bend-insensitive fibers are employed in the high-fiber-density optical-fiber cables according to the present invention. Bend-insensitive optical fibers are less susceptible to attenuation (*e.g.,* caused by macrobending and/or microbending).

Exemplary single-mode glass fibers for use in the present high-fiber-density optical-fiber cables are commercially available from Draka (Claremont, North Carolina) under the trade name BendBright^{®}, which is compliant with the ITU-T G.652.D standard. That said, it is within the scope of the present invention to employ a bend-insensitive glass fiber that meets the ITU-T G.657.A standard and/or the ITU-T G.657.B standard. The ITU-T G.652.D and ITU-T G.657.A/B standards are hereby incorporated by reference in their entirety.

In this regard, exemplary bend-insensitive single-mode glass fibers for use in the present invention are commercially available from Draka (Claremont, North Carolina) under the trade name BendBrighe^{XS®}. BendBright^{XS®} optical fibers, which are compliant with both the ITU-T G.652.D and ITU-T G.657.A/B standards, demonstrate significant improvement with respect to both macrobending and microbending.

Optical fibers typically have an outer diameter of between about 235 microns and 265 microns. The component glass fiber itself (*i.e*., the glass core and surrounding cladding layers) may have an outer diameter of about 125 microns, such that the total coating thickness is between about 55 microns and 70 microns.

With respect to the optical fiber's surrounding coating layers, the primary coating may have an outer diameter of between about 175 microns and 195 microns (*i.e*., a primary coating thickness of between about 25 microns and 35 microns) and the secondary coating may have an outer diameter of between about 235 microns and 265 microns (*i.e*., a secondary coating thickness of between about 20 microns and 45 microns). Optionally, the optical fiber may include an outermost ink layer, which is typically between two and ten microns in thickness.

That said, optical fibers having a smaller diameter (*e.g*., an outermost diameter between about 150 microns and 230 microns) are within the scope of the present invention. In this alternative optical fiber configuration, the thickness of the primary coating and/or secondary coating is reduced, while the diameter of the component glass fiber is maintained at about 125 microns. Those having ordinary skill in the art will appreciate that, unless otherwise specified, diameter measurements refer to outer diameters.

By way of illustration, in such exemplary embodiments the primary coating layer may have an outer diameter of between about 135 microns and about 175 microns (*e.g*., about 160 microns), typically less than 165 microns (*e.g*., between about 135 microns and 150 microns) and usually more than 140 microns (*e.g*., between about 145 microns and 155 microns, such as about 150 microns).

Moreover, in such exemplary embodiments the secondary coating layer may have an outer diameter of between about 150 microns and about 230 microns (*e.g*., more than about 165 microns, such as 190-210 microns or so), typically between about 180 microns and 200 microns. In other words, the total diameter of the optical fiber is reduced to less than about 230 microns, preferably less than about 210 microns (*e.g*., between about 195 microns and 205 microns, and especially about 200 microns). By way of further illustration, an optical fiber may employ a secondary coating of about 197 microns at a tolerance of +/- 5 microns (*i.e*., a secondary-coating outer diameter of between 192 microns to 202 microns). Typically, the secondary coating will retain a thickness of at least about 10 microns (*e.g*., an optical fiber having a reduced thickness secondary coating of between 15 microns and 25 microns).

In another alternative embodiment, the outer diameter of the component glass fiber may be reduced to less than 125 microns (*e.g*., between about 60 microns and 120 microns), perhaps between about 70 microns and 115 microns (*e.g*., about 80-110 microns). This may be achieved, for instance, by reducing the thickness of one or more cladding layers. As compared with the prior alternative embodiment, (*i*) the total diameter of the optical fiber may be reduced (*i.e*., the thickness of the primary and secondary coatings are maintained in accordance with the prior alternative embodiment) or (*ii*) the respective thicknesses of the primary and/or secondary coatings may be increased relative to the prior alternative embodiment (*e.g*., such that the total diameter of the optical fiber might be maintained).

By way of illustration, with respect to the former, a component glass fiber having a diameter of between about 90 and 100 microns might be combined with a primary coating layer having an outer diameter of between about 110 microns and 150 microns (*e.g*., about 125 microns) and a secondary coating layer having an outer diameter of between about 130 microns and 190 microns (*e.g*., about 155 microns). With respect to the latter, a component glass fiber having a diameter of between about 90 and 100 microns might be combined with a primary coating layer having an outer diameter of between about 120 microns and 140 microns (*e.g*., about 130 microns) and a secondary coating layer having an outer diameter of between about 160 microns and 230 microns (*e.g*., about 195-200 microns).

Reducing the diameter of the component glass fiber might make the resulting optical fiber more susceptible to microbending attenuation. That said, the advantages of further reducing optical-fiber diameter may be worthwhile for some optical-fiber applications.

The single-mode optical fibers included within the present high-fiber-density, optical-fiber cables typically have a MAC value of less than about 7.4 at a wavelength 1310 nanometers. An optical fiber's MAC value is defined as the ratio of the mode field diameter of the fiber at 1310 nanometers over the effective cut-off wavelength λ_{ceff}. The cut-off wavelength is conventionally measured as the wavelength at which the optical signal is no longer single mode after propagation over two meters of fiber, as defined by Subcommittee 86A of the International Electrotechnical Commission in the IEC 60793 1-44 standard. The MAC value constitutes a parameter for assessing the performance of an optical fiber with respect to the fiber's mode field diameter, effective cut off wavelength, and bending losses.

The present high-fiber-density cable has been described herein with respect to single-mode optical fibers. That said, and without being bound by any theory, it is thought that the present cable design might be employed using multimode optical fibers (*e.g*., 50-micron-core multimode optical fibers that comply with the ITU-T G.651 standard).

In the specification and figure, typical embodiments of the invention have been disclosed. The present invention is not limited to such exemplary embodiments. The figure is a schematic representations and so is not necessarily drawn to scale. Unless otherwise noted, specific terms have been used in a generic and descriptive sense and not for purposes of limitation.

## Claims

1. An optical-fiber cable, comprising:
a plurality of micromodules positioned within and surrounded by a polymeric cable jacket, one or more of said micromodules enclosing a plurality of optical fibers;
wherein the optical-fiber cable possesses an inner cable fiber density of at least about 3.5 fibers/mm², preferably of at least about 3.75 fibers/mm².

2. An optical-fiber cable according to Claim 1, wherein at least one of said optical fibers possesses an outer diameter of less than about 230 microns, preferably less than about 210 microns, more preferably less than 205 microns and still more preferably between about 190 microns and 205 microns.

3. An optical-fiber cable according to Claim 1, wherein each of said optical fibers possesses an outer diameter of between about 190 microns and 205 microns.

4. An optical-fiber cable according to any one of Claims 1-3, wherein the optical-fiber cable possesses an inner cable fiber density of at least about 5.0 fibers/mm².

5. An optical-fiber cable according to any one of Claims 1-3, wherein the optical-fiber cable possesses an inner cable fiber density of at least about 6.0 fibers/mm².

6. An optical-fiber cable according to any one of Claims 1-3, wherein the optical-fiber cable possesses an inner cable fiber density of at least about 7.0 fibers/mm².

7. An optical-fiber cable according to any one of Claims 1-6, wherein the optical-fiber cable possesses a cable fiber density of at least about 2.0 fibers/mm², preferably of at least about 2.4 fibers/mm², more preferably of at least 2.85 fibers/mm².

8. An optical-fiber cable according to any one of Claims 1-6, wherein the optical-fiber cable possesses a cable fiber density of at least about 3.25 fibers/mm².

9. An optical-fiber cable according to any one of Claims 1-6, wherein the optical-fiber cable possesses a cable fiber density of at least about 4.0 fibers/mm².

10. An optical-fiber cable according to any one of Claims 1-9, wherein said cable jacket has an outer diameter of about 17.5 millimeters or less, preferably of about 16 millimeters or less, and wherein said cable jacket encloses at least 720 optical fibers.

11. An optical-fiber cable according to any one of Claims 1-10, wherein said micromodules comprise polymeric material having a Young's modulus of between about 50 MPa and 500 MPa, preferably between about 50 MPa and 300 MPa, more preferably between about 50 MPa and 250 MPa.

12. An optical-fiber cable according to claim 11, wherein said micromodules comprise polymeric material having a Young's modulus of less than about 200 MPa, more preferably of less than about 100 MPa.

13. An optical-fiber cable according to any one of Claims 1-10, wherein said micromodules comprise polymeric material having a Young's modulus of between about 10 MPa and 90 MPa, preferably between about 10 MPa and 50 MPa, more preferbly between about 20 MPa and 40 MPa, still more preferably between 25 MPa and 30 MPa.

14. An optical-fiber cable according to any one of Claims 1-13, wherein the optical-fiber cable complies with the crush-resistance standard set forth in IEC 60794-1-2 (method E3).

15. An optical-fiber cable according to any one of Claims 1-14, wherein the optical-fiber cable complies with the crush-resistance standard set forth in IEC 60794-3-10.
